# EUROPEAN PATENT APPLICATION

(11) **EP 1 411 755 A2**
(43) Date of publication of application: **21.04.2004**
(21) Application number: 03019255.3
(22) Date of filing: 26.08.2003
(51) Int. Cl.: H05K 7/20

(54) **Electronic apparatus having a liquid-coolant circulation path and an electric-signal cable**

(30) Priority: 15.10.2002 JP 2002300927
(71) Applicant: Kabushiki Kaisha Toshiba, Tokyo (JP)
(72) Inventor: Hisano, Katsumi, 1-1 Shibaura 1-chome Minato-ku Tokyo 105 (JP); Takamatsu, Tomonao, 1-1 Shibaura 1-chome Minato-ku Tokyo 105 (JP); Tanimoto, Mitsuyoshi, 1-1 Shibaura 1-chome Minato-ku Tokyo 105 (JP); Kusaka, Hiroyuki, 1-1 Shibaura 1-chome Minato-ku Tokyo 105 (JP); Kinoshita, Teruo, 1-1 Shibaura 1-chome Minato-ku Tokyo 105 (JP)
(74) Representative: Henkel, Feiler & Hänzel

(57) **Abstract**

An electronic apparatus (1) comprises a first housing (4) and a second housing (8). A junction between the first and second housings (4, 8) has three passages (20a, 20b, 20d, 78a, 78c, 78d) that connect an interior of the first housing (4) and an interior of the second housing (8). A cable (60) in which electric signals flow extends through one of the three passages (20b, 78c). Two pipes (57, 58) are provided. The first pipe (57) supplies liquid coolant heated in a heat-receiving portion (33). The second pipe (58) supplies the liquid coolant cooled in a heat-radiating portion (35). The first and second pipes (57, 58) extend through the remaining two of the three passages (20a, 20d, 78a, 78d), respectively.

## Description

The present invention relates to an electronic apparatus of liquid-cooled type, in which a heat-generating component such as a CPU is cooled with liquid coolant. More particularly, the invention relates to a structure that prevents interference between a liquid-coolant circulation path and electric-signal cables.

A CPU is incorporated in, for example, notebook-type portable computers. The heat the CPU generates while operating is increasing as its data-processing speed rises and it performs more and more functions. To cool the CPU, so-called "cooling systems of liquid cooling type" have been developed in recent years. A liquid-cooling system uses a liquid coolant that has a far higher specific heat than air.

Jpn. Pat. Appln. KOKAI Publication No. 7-142886 discloses a cooling system of liquid cooling type, configured for use in portable computers. The cooling system comprises a heat-receiving header, heat-radiating header, and two tubes for circulating the coolant. The heat-receiving header is provided in the main 'unit of a portable computer and is thermally connected to the CPU incorporated in the portable computer. The heat-radiating header is provided in the display unit of the portable computer and lies at the back of the display panel provided in the display unit. The tubes extend between the main unit and the display unit of the computer, connecting the heat-receiving header and the heat-radiating header. Thus, the liquid coolant flows through the tubes and is circulated between the heat-receiving header and the heat-radiating header.

In this cooling system, the liquid coolant in the heat-receiving header absorbs the heat generated by the CPU. That is, the coolant is heated in the heat-receiving header. The coolant thus heated is transferred via the first tube into the heat-radiating header. The heat-radiating header radiates the heat generated by the CPU, as the coolant flows through it. The coolant is therefore cooled in the heat-radiating header. The coolant thus cooled is transferred via the second tube, back into the heat-receiving header. Back in the heat-receiving header, the coolant again absorbs the heat from the CPU. As the coolant is thus circulated, the heat is transmitted from the CPU to the heat-radiating header with high efficiency. The heat-radiating head radiates the heat. This enhances the efficiency of cooling the CPU.

A cable electrically connects the display panel to the printed circuit board that is incorporated in the main unit. Electric signals travels through the cable, from the display panel to the printed circuit board and vice versa. The cable and the first and second tubes, in which the liquid coolant flows, are guided around the junction between the main unit and display unit.

The cable and the tubes may be guided in the same passage provided in the junction between the main unit and display unit. In this case, the passage must be broad enough to allow the passage of the cable and both tubes. The junction between the main unit and display unit will be inevitably large. Further, the two tubes and the cable may interfere with one another in the process of guiding them in that route. If they interfere, it will take much labor and time to arrange them appropriately. Consequently, the efficiency of assembling the portable computer will decrease.

Furthermore, heat exchange may occur between the first tube in which the liquid coolant flows after heated in the heat-receiving header and the second tube in which the liquid coolant flows after cooled in the heat-radiating header. This impairs efficient transfer of heat from the CPU to the heat-radiating header. The efficiency of cooling the CPU cannot be enhanced.

An object of the present invention is to provide an electronic apparatus comprising a first housing and a second housing, in which a cable and two pipes can easily guided through the junction between the first and second housings and the heat exchange between the two passages can be prevented.

To achieve the object, an electronic apparatus according to one aspect of the invention comprises: a first housing incorporating a heat-generating component and a first circuit component; a second housing coupled to the first housing and incorporating a second circuit component; a heat-receiving portion provided in the first housing, and thermally connected to the heat-generating component; a head-radiating portion, provided in the first housing and radiating heat generated by the heat-generating component; a circulation path through which liquid coolant is circulated between the heat-receiving portion and the heat-radiating portion to transfer the heat from the heat-generating component to the heat-radiating portion; and a cable which extends between the first housing and the second housing and electrically connects the first circuit component and the second circuit component. The circulation path includes a first pipe and a second pipe. The first pipe supplies the liquid coolant heated in the heat-radiating portion to the heat-radiating portion. The second pipe supplies the liquid coolant cooled in the heat-radiating portion to the heat-receiving portion. In the apparatus, a junction between the first housing and second housing has three passages which connect an interior of the first housing and an interior of the second housing, the cable extending through at least one of the three passages, and the first and the second pipes extend respectively through the remaining two of the at least three passages.

The cable and the first and second pipes are prevented from interfering. This renders it easy to guide through the junction between the first housing and the second housing. Moreover, it is possible to avoid heat exchange between the first and second pipes. Hence, the heat generated by the heat-generating component can be efficiently transferred from the heat-receiving portion to the heat-radiating portion.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of a portable computer according to a first embodiment of this invention;
FIG. 2 is a perspective view of the portable computer, showing the positional relation between the heat-radiating portion and display housing of the computer;
FIG. 3 is a sectional view of the portable computer according to the first embodiment, schematically illustrating the route in which the first and second tubes are guide, connecting the pump to the heat-radiating portion, and the route in which the cable is guided, electrically connecting the printed circuit board to the circuit for driving the liquid crystal display panel;
FIG. 4 is a sectional view showing the heat-receiving portion and the pump, which are secured on the printed circuit board by support members in the first embodiment of the present invention;
FIG. 5 is a plan view of the pump incorporated in the first embodiment of the invention;
FIG. 6 is a sectional view of the portable. computer according to the first embodiment, depicting the junction between the heat-radiating portion and second tube, which is covered with a buffering member;
FIG. 7 is a sectional view of a modified heat-radiating portion for use in the first embodiment of this invention; and
FIG. 8 is a sectional view of a portable computer according to a second embodiment of the invention, schematically illustrating the route in which the first and second tubes are guide, connecting the pump to the heat-radiating portion, and the route in which the cable is guided, electrically connecting the printed circuit board to the circuit for driving the liquid crystal display panel.

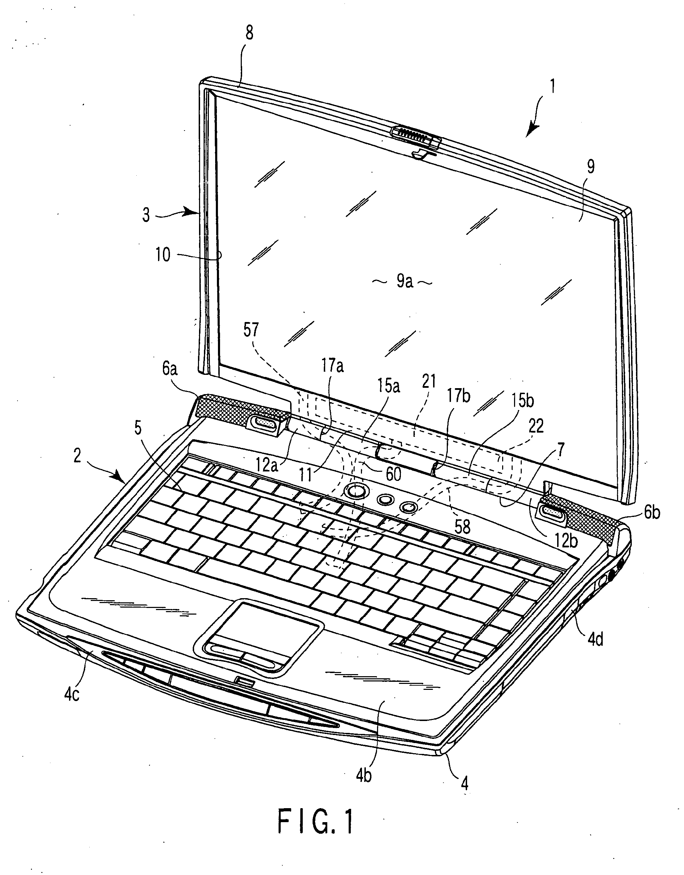

A first embodiment of this invention will be described, with reference to FIGS. 1 to 7.

FIGS. 1 to 3 show a portable computer 1, or an electronic apparatus according to this invention. The portable computer 1 comprises a computer main unit 2 and a display unit 3. The computer main unit 2 has a first housing 4 shaped like a flat box. The housing 4 comprises a bottom wall 4a, a top wall 4b, a front wall 4c, left and right sidewalls 4d, and a back wall 4e. The top wall 4b supports a keyboard 5.

Two speaker covers 6a and 6b and a display-supporting portion 7 are provided on the top wall 4b. The covers 6a and 6b cover two speakers (not shown), respectively. They lie at the back of the keyboard 5 and are spaced apart in the widthwise direction of the first housing 4. The display-supporting portion 7 lies at the rear edge of the first housing 4 and extends between the speaker covers 6a and 6b.

The display unit 3 comprises a display housing 8 and a liquid crystal display panel 9. The display housing 8, or the second housing, is shaped like a flat box and incorporates the liquid crystal display panel 9. The display housing 8 has a back wall 8a that covers the liquid crystal display panel 9 from behind. The housing 8 has a rectangular opening 10 that faces away from the back wall 8a. The liquid crystal display panel 9 has a screen 9a that can display images. The screen 9a is exposed outside the housing 8 through the opening 10.

The display housing 8 has a hollow leg 11. The leg 11 protrudes from the lower edge of the display housing 8 toward the display-supporting portion 7. It is located at midpoint between the left and right sidewalls 4d of the housing 4. The leg 11 has two end portions 12a and 12b. The first end portion 12a lies adjacent to the speaker cover 6a. The second end portion 12b lies adjacent to the speaker cover 6b.

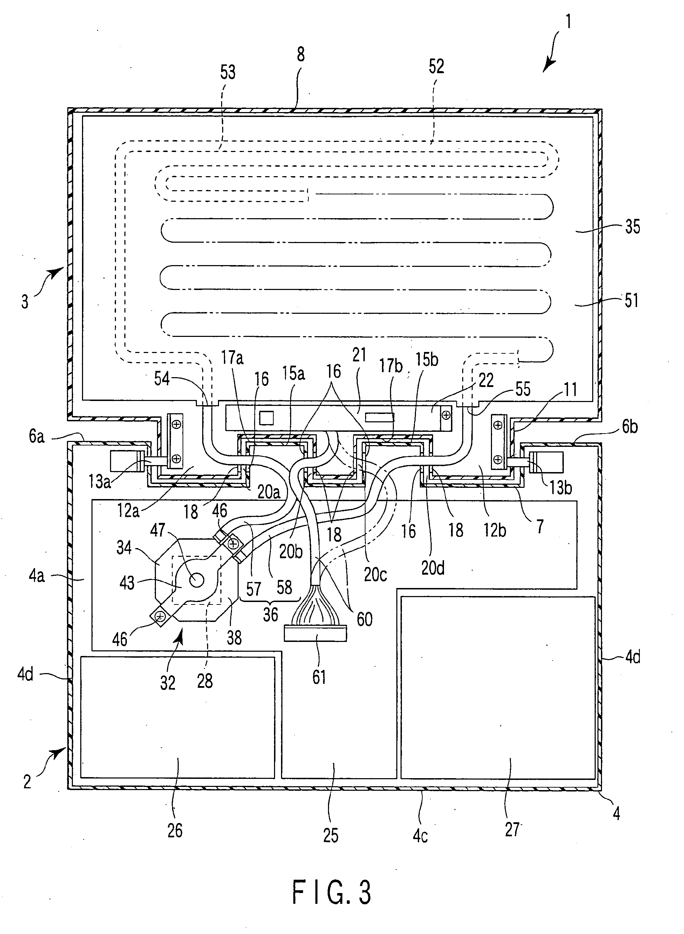

As FIG. 3 shows, two hinges 13a and 13b couples the leg 11 to the display-supporting portion 7. The first hinge 13a extends between the speaker cover 6a and the first end portion 12a of the leg 11. The second hinge 13b extends between the speaker cover 6b and the second end portion 12b of the leg 11. Thus, the display unit 3 is coupled to the first housing 4 and can be rotated between a closed position and an opened position. In the closed position, the display unit 3 lies over the main unit 2, covering the keyboard 5. In the opened position, the display unit 3 stands up at the rear edge of the main unit 2, exposing the keyboard 5 and the screen 9a of the liquid crystal display panel 9.

The display-supporting portion 7 and the leg 11 constitute a coupling that connects the first housing 4 and the display housing 8 together. The display-supporting portion 7 has two hollow projections 15a and 15b. The projections 15a and 15b open to the interior of the first housing 4. They are spaced apart in the widthwise direction of the first housing 4. They have two through holes 16 each, which are made in two opposing sides, respectively.

The leg 11 of the display housing 8 has two recesses 17a and 17b. The recesses 17a and 17b lie between the end portions 12a and 12b of the leg 11. They are aligned with the projections 15a and 15b of the display-supporting portion 7, respectively. The projections 15a and 15b are inserted in the recesses 17a and 17b and can rotate.

The leg 11 has through holes 18 in its opposing sides. The holes 18 are coaxial with the through holes 16 made in the projections 15a and 15b. The holes 16 and 18 constitute four passages 20a, 20b, 20c and 20d at the junction between the first housing 4 and display housing 8. The passages 20a to 20d lie in a line. They are spaced apart in the widthwise direction of the housings 4 and 8, each positioned at a junction of one projection and the recess adjacent to the projection. The four passages 20a to 20d connect the interior of the first housing 4 communicates to that of the display housing 8.

As FIGS. 1 and 3 shows, the display housing 8 contains a drive circuit 21 for driving the liquid crystal display panel 9. The drive circuit 21 has a circuit board 22 (i.e., second circuit component). The circuit board 22 is interposed between the liquid crystal display panel 9 and the leg 11.

The first housing 4 contains a printed circuit board 25 (i.e., first circuit component), a hard disk drive 26, and a CD-ROM drive 27. The board 25, drive 26 and drive 27 are fastened on the bottom wall 4a of the first housing 4.

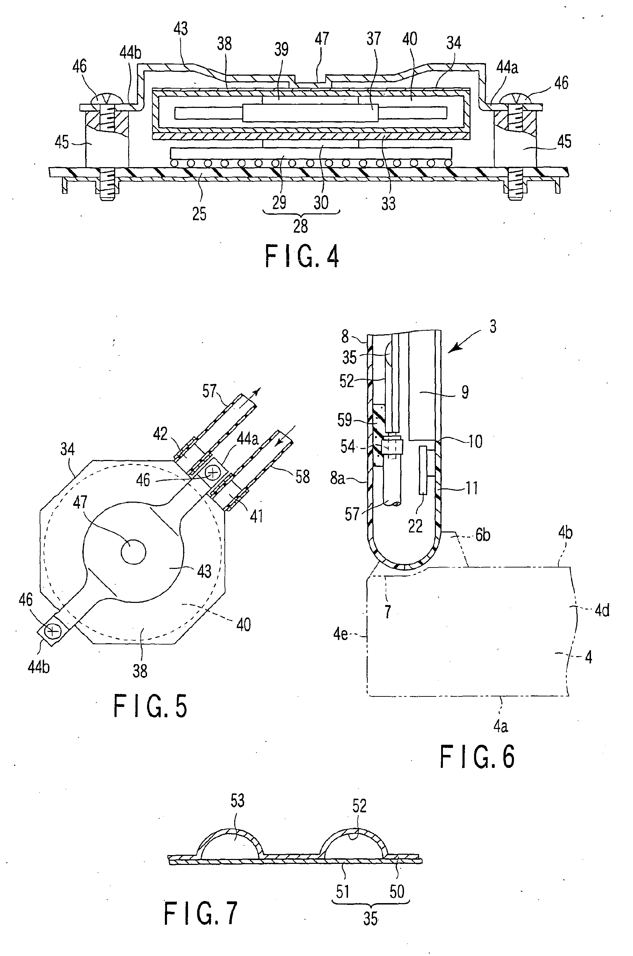

As FIG. 4 shows, a semiconductor package 28 of BGA type is mounted on the upper surface of the printed circuit board 25. The package 28, which is a heat-generating component, constitutes a CPU that is the brain of the portable computer 1. It is located closer to the left side of the first housing 1 than to the right side thereof. It has a square base 29 and an IC chip 30. The IC chip 30 is mounted on the center part of the base 29. The IC chip 30 generates enormous heat while operating. This is because the chip 30 operates at high speed and performs many functions. The IC chip 30 needs to be cooled to keep operating in a stable condition.

As shown in FIG. 3, the portable computer 1 further comprises a cooling unit 32 of liquid cooling type for cooling the semiconductor package 28. The cooling unit 32 comprises a heat-receiving portion 33, rotary pump 34, heat-radiating portion 35, and circulation path 36.

As FIG. 4 depicts, the heat-receiving portion 33 is a metal plate larger than the base 29 of the semiconductor package 28. It covers the IC chip 30 from above. The IC chip 30 is thermally connected to the lower surface of the heat-receiving portion 33, at the center part thereof.

As shown in FIGS. 4 and 5, the pump 34 is formed integral with the heat-receiving portion 33. The pump 34 comprises an impeller 37 and a pump housing 38. The impeller 37 is connected to a flat motor 39, which is supported on the pump housing 38. The flat motor 39 starts rotating the impeller 37 when the power switch of the portable computer 1 is closed or when the temperature of the semiconductor package 28 rises to a preset value.

The pump housing 38 is shaped like a flat box. It is made of heat-conductive metal such as aluminum alloy. It is laid on the upper surface of the heat-receiving portion 33 and hence thermally connected to the heat-receiving portion 33. The housing 38 has a pump chamber 40, inlet port 41, and outlet port 42. Both ports 41 and 42 are connected to the pump chamber 40. They extend backwards and slantwise, toward the junction between the first housing 4 and display housing 8.

A support strip 43 fastens the pump 34 to the upper surface of the printed circuit board 25. The strip 43 is a leaf spring and can be elastically deformed. It has two ends 44a and 44b and a pushing projection 47. Screws 46 fasten the ends 44a and 44 of the support strip 43 to two stud pins 45 that are secured to the printed circuit board 25. Therefore, the pushing projection 47 of the strip 43 abuts on the upper surface of the pump housing 38 at the center part thereof. The projection 47 pushes the heat-receiving portion 33 onto the semiconductor package 28.

As FIG. 6 illustrates, the display housing 8 incorporates the heat-radiating portion 35 of the cooling unit 32. The heat-radiating portion 35 is rectangular, as large as the liquid crystal display panel 9. The heat-radiating portion 35 is interposed between the back wall 8a of the display housing 8 and the back of the liquid crystal display panel 9.

As FIG. 7 shows, the heat-radiating portion 35 comprises two heat-radiating plates 50 and 51. The heat-radiating plates 50 and 51 are made of metal that excels in heat conductivity. They are laid, one upon the other. The first heat-radiating plate 50 has a bulging part 52 that protrude away from the second head-radiating plate 51. The bulging part 52 meanders and has a U-shaped cross section. It opens to the second head-radiating plate 51. The second heat-radiating plate 51 closes the opening of the bulging part 52. Thus, the bulging part 52 and the second heat-radiating plate 51 define a coolant path 53 that meanders.

The heat-radiating portion 35 has a coolant inlet port 54 and a coolant outlet port 55. The ports 54 and 55 oppose the leg 17 of the display housing 8. They are spaced apart in the widthwise direction of the display housing 8. The coolant inlet port 54 is provided at the left end of the heat-radiating portion 35 and positioned at the upstream end of the coolant path 53. The coolant outlet port 55 is provided at the right end of the heat-radiating portion 35 and positioned at the downstream end of the coolant path 53.

As seen from FIG. 3, the circulation path 36 of the cooling unit 32 comprises two pipes 57 and 58. The first pipe 57 connects the coolant outlet port 42 of the pump 34 to the coolant inlet port 54 of the heat-radiating portion 35. The first pipe 57 first extends from the pump 34 to the rear edge of the first housing 4 and thence into the left projection 15a of the display-supporting portion 7. The first pipe 57 is further guided into the first end portion 12a of the leg 11, passing through the first passage 20a. The first pipe 57 then extends from the first end portion 12a toward the coolant inlet port 54 of the heat-radiating portion 35.

The second pipe 58 connects the coolant inlet port 41 of the pump 34 to the coolant output port 55 of the heat-radiating portion 35. The second pipe 58 first extends from the pump 34 to the rear edge of the first housing 4 and thence into the right projection 15b of the display-supporting portion 7. The second pipe 58 is further guided into the second end portion 12b of the leg 11, passing through the fourth passage 20d. The second pipe 58 then extends from the second end portion 12b toward the coolant outlet port 55 of the heat-radiating portion 35. Thus, the pipes 57 and 58 extend between the main unit 2 and the display unit 3, while spaced apart in the widthwise direction of the first housing 4.

The first pipe 57 and the second pipe 58 are made of rubber or synthetic resin and therefore flexible. They are deformed to absorb the torsion that is applied to the circulation path 36 when the heat-radiating portion 35 is displaced with respect to the pump 34 as the user rotates the display unit 3.

The pump chamber 40 of the pump 34, the coolant path 53 of the heat-radiating portion 35, and the circulation path 36 are filled with liquid coolant (or cooling medium). The liquid coolant is, for example, an antifreeze prepared by an ethylene grycol solution and, if necessary, corrosion inhibitor, to water.

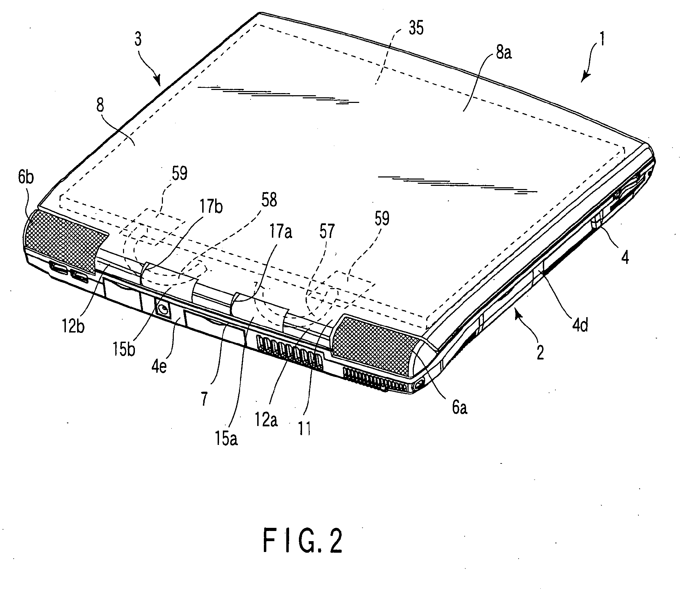

As FIGS. 2 and 6 show, the junction between the first pipe 57 and coolant inlet port 54 and the junction between the second pipe 58 and coolant outlet port 55 oppose the inner surface of the back wall 8a of the display housing 8. Two buffering members 59 cover these junctions, respectively. The buffering members 59 are made of rubber or foamed rubber and can undergo elastic deformation. Each buffering member 59 is interposed between the junction and the inner surface of the back wall 8a of the display housing 8.

When that part of the back wall 8a which lies at either junction is pushed from outside the display housing 8, the buffering member 59 is deformed, absorbing the pushing force. An excessive force is exerted neither on the junction between the coolant inlet port 54 and first pipe 57 nor on the junction between the coolant outlet port 55 and second pipe 58. Thus, the liquid coolant would not leak at the junctions.

As FIG. 3 depicts, a cable 60 electrically connects the drive circuit 21 of the liquid crystal display panel 9 to a connector 61 that is provided on the printed circuit board 25. The cable 60 extends through the junction between the first housing 4 and display housing 8.

More specifically, the cable 60 is guided over the printed circuit board 25 to the rear edge of the first housing 4 and then led into the left projection 15a of the display-supporting portion 7. The cable 60 is thence led into the leg 11 via the second passage 20b. The cable 60 extends from the leg 11 to the circuit board 22 of the drive circuit 21.

Thus, the cable 60, in which electric signals flow, extends between the fist housing 4 and the display housing 8, in a route that is different from the route in which the first and second pipes 57 and 58 are guided.

The IC chip 30 of the semiconductor package 28 generates heat while the portable computer 1 is being used. The heat that the IC chip 30 generates propagates through the heat-receiving portion 33 to the pump housing 38. The liquid coolant in the pump chamber 40 of the pump housing 38 absorbs the heat coming to the pump housing 38.

When the impeller 37 of the pump'34 rotates, the liquid coolant is forced from the pump chamber 40 into the heat-radiating portion 35 via the first pipe 57. Therefore, the liquid coolant is circulated between the pump chamber 40 and the coolant path 53 of the heat-radiating portion 35.

More precisely, the liquid coolant heated in the pump chamber 40 is guided to the heat-radiating portion 35 through the first pipe 57 and then flows through the meandering coolant path 53. While flowing through the coolant path 53, the liquid coolant releases the heat. The heat diffuses in the first and second heat-radiating plates 50 and 51. The plates 50 and 51 radiate the heat from their surfaces.

The liquid coolant is cooled as it passes through the liquid path 53. The coolant thus cooled is supplied back into the pump chamber 40 of the pump 34 through the second pipe 58. As the coolant flows in the pump chamber 40, it absorbs heat from the IC chip 30 again and is transferred to the heat-radiating portion 35. As the liquid coolant is so circulated, the heat of the IC chip 30 is transferred to the heat-radiating portion 35 provided in the display housing 8. The heat is radiated from the heat-radiating portion 35 and hence from the portable computer 1.

In the portable computer 1 thus structured, the first pipe 57 and second pipe 58, in which the liquid coolant flows, extend between the main unit 2 and display unit 3, through the first passage 20a and the fourth passage 20d, respectively, which are spaced apart in the width direction of the first housing 4. The cable 60, in which electric signals flow, extends between the main unit 2 and display unit 3, through the second passage 20b that lies between the first passage 20a and the fourth passage 4d.

Hence, the first pipe 57, the second pipe 58 and the cable 60 extend between the first housing 4 and the display housing 8, through three different routes, respectively. This makes it unnecessary for the passages 20a, 20b, 20c and 20d to have a large diameter. It follows that the display-supporting portion 7 and the leg 11 need not be large.

Since the passages 20a, 20b and 20d, through which the first pipe 57, cable 60 and second pipe 58 extend, respectively, are spaced apart, they would not interfere with one another at the junction between the first housing 4 and display housing 8. This renders it easy to laying out the cable 60, first pipe 57 and second pipe 58, ultimately facilitating the assembling of the portable computer 1.

The first pipe 57, in which the liquid coolant flows after being heated in the heat-receiving portion 33, and the second pipe 58, in which the liquid coolant flows after being cooled in the heat-radiating portion 35, are spaced apart from, though they extend between the heat-receiving portion 33 and the heat-radiating portion 35. Thus, no heat exchange occurs between the heat-receiving portion 33 and the heat-radiating portion 35. Heat can therefore be efficiently transferred from the semiconductor package 28 to the heat-radiating portion 35. This enhances the efficiency of cooling the package 28.

In the first embodiment, of the passages 20a to 20d, the third passage 20c remains vacant. Thus, the cable 60 may be guided through the third passage 20c as indicated by the two-dot, dashed lines in FIG. 3, not through the second passage 20b. If the display housing 8 contains an antenna for radio communication, the antenna cable connected to the antennal may be led into the first housing 4 through the third passage 20c.

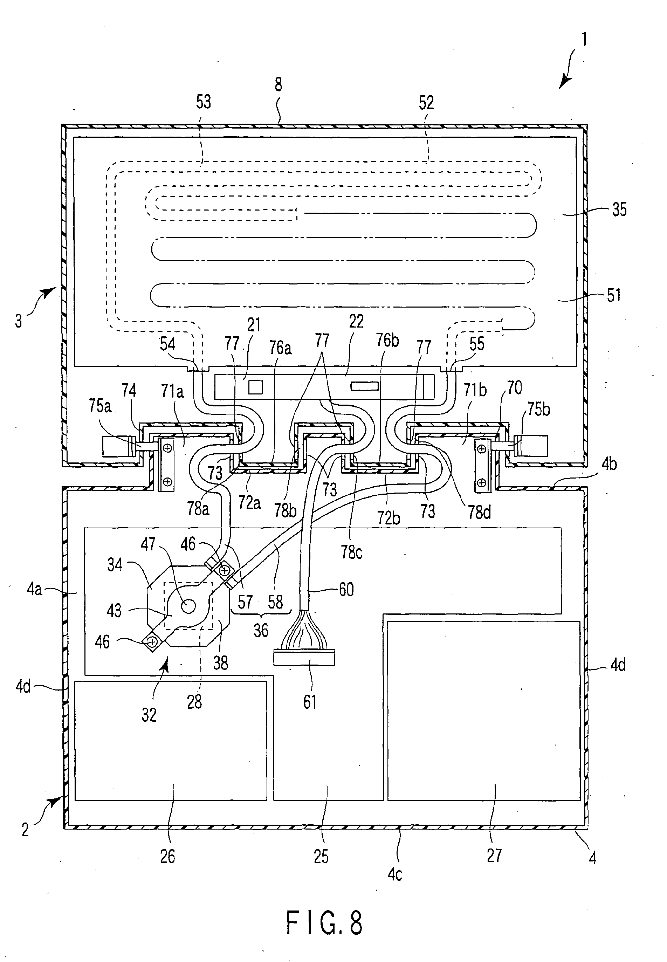

The present invention is not limited to the first embodiment. FIG. 8 shows the second embodiment of the invention.

The second embodiment differs from the first in the structure of the junction between the first housing 4 and display housing 8. It is identical to the second embodiment in any other basic structural features. The components identical or similar to those of the first embodiment are designated at the same reference numerals and will not be described.

As FIG. 8 shows, the first housing 4 has a hollow display-supporting section 70 at its top wall 4b. The display-supporting section 70 extends in the widthwise direction of the first housing 4 and projects upward from the top wall 4b. The section 70 opens to the interior of the first housing 4.

The display-supporting section 70 further has two end portions 71a and 71b and two recesses 72a and 72b. The end portions 71a and 71b are spaced apart in the widthwise direction of the first housing 4. The recesses 72a and 72b are located between the end portions 71a and 71b and spaced apart in the widthwise direction of the first housing 4. Those sidewalls of the display-supporting section 70 which define the recesses 72a and 72b have through holes 73.

The display housing 8 has an end portion that lies adjacent to the rear edge of the first housing 4. The end portion has a recess 74 that extends in the widthwise direction of the display housing 8. The end portions 71a and 71b of the display-supporting portion 70 are fitted in the recess 74 so that the display housing 8 may rotate.

Two hinges 75a and 75b couple the display housing 8 to the display-supporting section 70. Thus, the display housing 8 can be rotated. One hinge 75a extends between the first end portion 71a of the section 70 and the display housing 8. The other hinge 75b extends between the second end portion 71b of the section 70 and the display housing 8.

Two hollow projections 76a and 76b are provided in the recess 74 of the display housing 8. The projections 76a and 76b open to the interior of the display housing 8 and are fitted in the recesses 72a and 73b of the display-supporting section 70.

The projections 76a and 76b have two through holes 77 each, which are made in the sidewalls. The through holes 77 of the projections 76a and 76b are coaxial with the through holes 73 made in those sidewalls of the display-supporting section 70 which define the recesses 72a and 72b. The holes 73 and holes 77 constitute four passages 78a to 78d at the junction between the first housing 4 and display housing 8. The passages 78a to 78d lie in a line, spaced apart from each other in the widthwise direction of the first housing 4 and display housing 8. The interior of the first housing 4 communicates with that of the display housing 8.

As FIG. 8 shows, the first pipe 57, which supplies the liquid coolant into the heat-radiating portion 35 after the coolant is heated in the heat-receiving portion 33, is led to the rear edge of the first housing 4 and then guided into the first end portion 71a of the display-supporting section 70. The first pipe 57 then extends into the hollow projection 76a through the first passage 78a and thence to the coolant inlet port 54 of the heat-radiating portion 35.

The second pipe 58, which supplies the liquid coolant back into the heat-receiving portion 33 after the coolant is cooled in the heat-radiating portion 35, is guided to the rear edge of the first housing 4 and then into the second end portion 71b of the display-supporting section 70. The second pipe 58 is further guided into the hollow projection 76b through the fourth passage 78d and thence extends to the coolant outlet port 55 of the heat-radiating portion 35. Hence, the pipes 57 and 58 pass through the junction between the first housing 4 and display housing 8, spaced from each other in the widthwise direction of the first housing 4.

The cable 60, in which electric signals flow, extends over the printed circuit board 25 to the rear edge of the first housing 4. The cable 60 is then led into the center part of the display-supporting section 70. It is thence guided into the hollow projection 76b via the third passage 78c. It extends from the projection 76b to the circuit board 22 of the drive circuit 21. Thus, the cable 60 passes through the junction between the first housing 4 and display housing 8, in a route different from the routes in which the coolant-supplying pipes 57 and 58 are guided.

The electronic apparatus according to the present invention is not limited to a portable computer. Rather, the invention can be applied to information-processing apparatuses of any other types.

## Claims

1. An electronic apparatus comprising:
a first housing (4) incorporating a heat-generating component (28) and a first circuit component (25) ;
a second housing (8) coupled to the first housing (4) and incorporating a second circuit component (9);
a heat-receiving portion (33) provided in the first housing (4), and thermally connected to the heat-generating component (28);
a head-radiating portion (35), provided in the second housing (8) and radiating heat generated by the heat-generating component (28);
a circulation path (36) through which liquid coolant is circulated between the heat-receiving portion (33) and the heat-radiating portion (35) to transfer the heat from the heat-generating component (28) to the heat-radiating portion (35), and which includes a first pipe (57) which supplies the liquid coolant heated in the heat-receiving,portion (33) to the heat-radiating portion (35) and a second pipe (58) which supplies the liquid coolant cooled in the heat-radiating portion (35) to the heat-receiving portion (33); and
a cable (60) which extends between the first housing (4) and the second housing (8) and electrically connects the first circuit component (25) and the second circuit component (9),
**characterized in that** a junction between the first housing (4) and second housing (8) has three passages (20a, 20b, 20d, 78a, 78c, 78c) which connect an interior of the first housing (4) and an interior of the second housing (8), the cable (60) extending through one of said three passages (20b, 78c), and the first and the second pipes (57, 58) extend respectively through the remaining two of said three passages (20a, 20d, 78a, 78d).

2. The electronic apparatus according to claim 1, **characterized in that** the remaining two of said three passages (20a, 20d, 78a, 78d), through which the first and second pipes (57, 58) extend, are spaced apart from each other in a widthwise direction of the first and the second housings (4, 8), and said one of said three passages (20b, 78c), through which the cable (60) extends, is positioned between said remaining two of said three passages (20a, 20d, 78a, 78d).

3. The electronic apparatus according to claim 1, **characterized by** further comprising two hinges (13a, 13b) which support the second housing (8) to allow the first housing (4) to rotate and which are spaced apart from each other in a widthwise direction of the first and the second housings (4, 8), and said three passages (20a, 20b, 20d, 78a, 78c, 78d) are positioned between the hinges (13a, 13b).

4. The electronic apparatus according to claim 1, **characterized in that** the junction between the first and second housings (4, 8) is located at a midpoint with respect to a widthwise direction of the first and second housings (4, 8), the heat-radiating portion (35) having a coolant inlet port (54) connected to the first pipe (57) and a coolant outlet port (55) connected to the second pipe (58), and the coolant inlet port (54) and the coolant outlet port (55) are spaced apart from each other in the widthwise direction of the second housing (8).

5. The electronic apparatus according to claim 1, **characterized in that** the second housing (8) has a hollow leg (11) which protrudes toward the first housing (4) and which has two recesses (17a, 17b) spaced apart in a widthwise direction of the second housing (8), the first housing (4) has two hollow projections (15a, 15b) which are inserted in the recesses (17a, 17b), and each of said three passages (20a, 20b, 20d) extends between one hollow projection (15a, 15b) and a sidewall defining the recess (17a, 17b) in which the hollow projection (15a, 15b) is inserted.

6. The electronic apparatus according to claim 1, **characterized in that** the first housing (4) has a hollow support member (70) which protrudes toward the second housing (8) and which has two recesses (72a, 72b) spaced part in a widthwise direction of the first housing (4), the second housing (8) has two hollow projections (76a, 76b) inserted in the recesses (72a, 72b), and each of said three passages (78a, 78c, 78d) extends between one hollow projection (76a, 76b) and a sidewall defining the recess (72a, 72b) in which the hollow projection (76a, 76b) is inserted.

7. The electronic apparatus according to claim 1, **characterized in that** the heat-receiving portion (33) has a pump (34) which supplies the liquid coolant, heated in the heat-receiving portion (33), to the heat-radiating portion (35).

8. The electronic apparatus according to claim 1, **characterized in that** the first and the second pipes (57, 58) are flexible.
